# EUROPEAN PATENT SPECIFICATION

(11) **EP 2 739 582 B1**
(45) Date of publication and mention of the grant of the patent: **29.06.2016**
(21) Application number: 12745751.3
(22) Date of filing: 31.07.2012
(51) Int. Cl.: C03C 25/28, C03C 25/30, C03C 25/32, C03C 25/36

(54) **SIZING COMPOSITIONS AND METHODS OF THEIR USE**
HAFTZUSAMMENSETZUNGEN UND VERFAHREN ZU IHRER VERWENDUNG
COMPOSITIONS D'ENSIMAGE ET LEURS PROCÉDÉS D'UTILISATION

(30) Priority: 01.08.2011 US 201161513879 P
(43) Date of publication of application: 11.06.2014
(73) Proprietor: OCV Intellectual Capital, LLC, Toledo, OH 43659 (US)
(72) Inventor: CEUGNIET, Claire, Genevieve, F-73410 Saint-Ours (FR); LOMBINO, Dino, F-73290 La Motte Servolex (FR)
(74) Representative: Nevant, Marc
(86) International application number: PCT/US2012/048935
(87) International publication number: WO 2013/019773

(56) References cited:
- WO-A1-00/26155
- WO-A1-01/94447
- WO-A2-2009/044042
- US-A- 4 137 209
- US-A- 5 354 829
- US-A- 5 646 207
- US-A1- 2011 229 716
- US-B1- 6 399 741

## Description

### Field

The present disclosure relates to a sizing composition for glass fiber strands, glass fiber strands obtained by coating glass fibers with said sizing composition, and composite materials incorporating said glass fiber strands.

### Background

Reinforcing glass strands are conventionally prepared by mechanically drawing molten glass streams flowing by gravity from multiple orifices of bushings filled with molten glass to form filaments which are gathered together into base strands, and then collected. During the drawing of the glass filaments, and before they are gathered together into strands, the glass filaments are coated with a sizing composition, generally an aqueous sizing composition, using a rotating roll. The role of the sizing composition (also referred to as "size") is two-fold:
1) during the manufacture of the strands, the size protects the filaments from the abrasion resulting from the rubbing of the filaments at high speed over the members of the process, thus acting as lubricant. It also makes it possible to remove the electrostatic charges generated during this rubbing. Finally, it gives cohesion to the strand by providing bonding of the filaments to one another; and
2) during the production of reinforced materials, the size improves the wetting of the glass and the impregnation of the strand by the material to be reinforced. It also promotes adhesion between the glass and the material, thus resulting in composite materials having improved mechanical properties.

The most commonly employed sizing compositions are aqueous compositions and, in particular, aqueous sizing compositions including a film-forming agent which exhibits in particular the advantages of giving mechanical cohesion to the final size and protecting the strands against mechanical damage and attacks from chemicals and the environment. These sizing compositions are comprised of more than 80% by weight of water and consequently have a low viscosity, generally at most equal to 5 mPa.s, which allows them to be easily deposited with relatively simple sizing devices, for example using a rotating roll over which the glass filaments pass at high speed. However, the following drawbacks occur due to the presence of water in such a high amount:
1) the sizing composition does not adhere well to the glass when the strand comes into contact with the various elements which act to guide it to the winder; a draining phenomenon occurs, followed by centrifugal projection of the size under the effect of the drawing speed; and
2) water has to be removed by drying the packages of strand, which brings about selective migration of the constituents of the size as a function of their affinity for water and their molecular weight, essentially from the inside to the outside of the package; as a result, the properties of the strand are not constant over the entire length of the package, which is reflected in particular by processing problems in weaving operations and the appearance of impregnation defects (*e.g.,* white spots) in composites having an organic matrix.

One way to overcome the latter disadvantage is to include a texturing agent into the size as reported in WO 2009/044042. The texturing agent confers the appearance of a physical gel to the size.

Sizing compositions including a texturing agent often comprise a cationic polymer, sometimes referred to as cationic lubricant (see, *e.g.,* WO 2009/044042). The stability of such sizing compositions over time has, however, proved not to be optimal when used on an industrial scale, where fiberizing of glass strands typically proceeds up to 48 or 72 hours without interruption. It has in particular been observed that over time the sizing composition aggregates on the rotating roll thereby hindering or reducing the efficiency of fiberizing. Without wishing to be bound by theory, it is believed that this is due to the interaction between the texturing agent, which comprises anionic groups, and the cationic polymer, which has been identified to comprise at least about 50% cationic groups.

There is therefore a need for a sizing composition which is stable and does not aggregate on process elements over time, which exhibits a high viscosity, is substantially free of migration of the size constituents and provides consistent loss on ignition (LOI) values on the strands.

Such a sizing composition would be beneficial in the production of glass strands in various forms (continuous, chopped or milled strands, mats of continuous or chopped strands, meshes, wovens, knits, and the like) useful for reinforcing matrices of varied natures, for example, thermoplastic or thermosetting materials.

### Summary

It has now been found that the addition of a specific cationic polymer to a sizing composition comprising a texturing agent improves the stability and increases the viscosity of the sizing composition, thereby improving fiber processing.

Accordingly, a first aspect of the present disclosure relates to a sizing composition comprising a texturing agent, a film-forming agent, a coupling agent, a cationic polymer comprising a polyalkylene imine backbone and additives, the cationic polymer having at most 20% of reactive amino groups. In one exemplary embodiment, the texturing agent comprises a succinoglycan. In another embodiment, the film-forming agent comprises a compound selected from a polyvinyl acetate, a polyurethane, a polyester, an epoxy compound, and mixtures thereof. In another embodiment, the coupling agent comprises a silane or a mixture of silanes. In another embodiment, the cationic polymer comprises a polyethylene imine backbone.

Another aspect of the disclosure relates to a process for preparing the sizing composition. In one embodiment, the process comprises hydrolysing the coupling agent, adding the cationic polymer to the solution, and then adding the texturing agent to the resulting mixture.

A further aspect of the disclosure relates to glass fiber strands coated with the sizing composition.

Yet a further aspect of the disclosure relates to composite materials made from the glass strands coated with the sizing composition.

### Brief description of the figures

Figure 1 shows the structure of a xanthan and of a succinoglycan used in the sizing composition, according to one exemplary embodiment.
Figure 2 is a graph showing migration variation in multi-end rovings.
Figure 3 is a photograph showing the coloration of multi-end rovings.
Figure 4 is a graph showing LOI variation in direct rovings.

### Detailed description

A sizing composition, according to one exemplary embodiment, comprises by weight (dry extract solids content):
about 0.1% to about 2% of a texturing agent;
about 2% to about 15% of a film-forming agent;
about 0.1% to about 4% of a coupling agent;
about 0.01% to about 0.5% of a cationic polymer comprising a polyalkyleneimine backbone, said polymer having 20% or less of reactive amino groups; and
about 0.1% to about 6% of a compound selected from a lubricant, a surfactant, a plasticizing agent, a dispersing agent, additives and mixtures thereof.

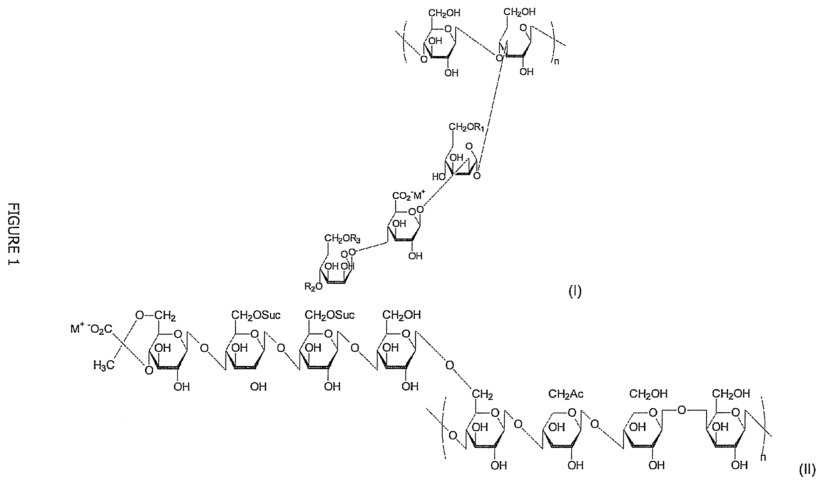

In some exemplary embodiments, the texturing agent used in the sizing composition is a polysaccharide, such as a xanthan or a succinoglycan. In one embodiment, the xanthan is represented by formula (I), as shown in Figure 1, in which:
M = Na, K or ½ Ca;
R₁ = H or -COCH₃;
R₂ and R₃ = H or 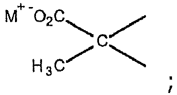
or R₂ = H and R₃ = -COCH₃.

In another embodiment, the succinoglycan is represented by formula (II) as shown in Figure 1 in which:
Ac = -COCH₃;
Suc = -CO(CH₂)₂COOH;
M = Na, K or ½ Ca;
n ≥ 80.

In some exemplary embodiments, the amount of texturing agent in the sizing composition (dry extract solids content) is in the range from about 0.15% to about 0.5% by weight.

The film-forming agent plays several roles: it makes it possible to protect the glass filaments from abrasion during drawing, on the one hand, and the strand from attacks from chemicals and the environment, on the other hand. It also confers integrity on the strand. Finally, it improves the compatibility of the sizing composition with the matrix to be reinforced. The choice of the film-forming agent depends largely on the chemical nature of the material to be reinforced.

In some exemplary embodiments, the film-forming agent is selected from polyvinyl acetates (homopolymers or copolymers of vinyl acetate, for example, copolymers of vinyl acetate and of ethylene), polyesters, polyethers, epoxy compounds, polyacrylics (*i.e.,* homopolymers or copolymers of derivatives of acrylic acid), polyurethanes and mixtures thereof. The film-forming agent may be selected from polyvinyl acetates, epoxy compounds, and mixtures thereof. In some embodiments, the content of the film-forming agent (dry extract solids content) is in the range from about 2% to about 10% by weight of the sizing composition. The film-forming agent is generally in the form of an emulsion, which may contain at least one surfactant.

The sizing composition of the disclosure also comprises a coupling agent, which ensures that the size attaches to the surface of the glass. The coupling agent may be a hydrolysable compound, for example, a compound which can be hydrolysed in the presence of an acid, such as acetic, lactic or citric acid. In one embodiment, the coupling agent is selected from silanes, such as γ-glycidoxypropyltrimethoxysilane, γ-acryloyloxypropyltrimethoxysilane, γ-methacryloyloxy-propyltrimethoxysilane, poly(oxyethylene/oxypropylene)-trimethoxysilane, γ-aminopropyltriethoxysilane, vinyltrimethoxysilane, phenylaminopropyltrimethoxysilane, styrylaminoethyl-aminopropyltrimethoxysilane and tert-butylcarbamoylpropyltrimethoxysilane; siloxanes, such as 1,3-divinyltetraethoxydisiloxane; titanates; zirconates, in particular, aluminium zirconates; and mixtures thereof. The coupling agent may be a silane or a mixture of silanes.

The sizing composition of the disclosure comprises a cationic polymer, which comprises a polyalkyleneimine backbone, said cationic polymer having 20% or less of reactive amino groups, and in some embodiments from about 0.1% to about 10% reactive amino groups. The cationic polymer acts as a processing aid during fiber processing. Polyalkyleneimines useful in the sizing composition include any polyalkyleneimines having reactive amino groups suitable for reaction with a carboxylic acid, in particular, carboxylic acids having from 2 to 18 carbon atoms, in some embodiments from 2 to 9 carbon atoms. In one embodiment, the polyalkyleneimine is a polyethyleneimine, in particular, a polyethyleneimine having a molecular weight of from about 1000 to about 2000. In another embodiment, the polyalkyleneimine is reacted with a mixture of two or more carboxylic acids, *e.g.,* a mixture of a C₂ carboxylic acid and a C₉ carboxylic acid. As used herein, the terms "polyalkyleneimine backbone" and "polyethyleneimine backbone" refer to that portion of the resulting polymer derivative which is derived from the original polyalkyleneimine starting material. As further used herein, the term "reactive amino group" shall refer to any primary or secondary nitrogen atom in a polyalkyleneimine. Thus, a cationic polymer suitable for use in the sizing compositions of the disclosure is a polyalkyleneimine comprising at most 20% primary or secondary nitrogen atoms. Such a polyalkyleneimine can be obtained as described in U.S. Patent No. 6,399,741. The amount of cationic polymer in the sizing composition (dry extract solids content) may be in the range from about 0.01% to about 3% by weight.

The sizing composition of the disclosure also comprises one or more compounds selected from a lubricant, a surfactant, a plasticizing agent, a dispersing agent, additives, and combinations thereof, the role of which is to promote suspension and to make possible homogeneous dispersion of the various constituents of the composition while preventing problems of separation of the liquid phases, and to provide efficient and rapid wetting of the strands during the manufacture of the composites.

Lubricants suitable for use in the sizing composition of the disclosure include an optionally alkoxylated (*e.g*., ethoxylated) fatty acid ester, such as for example decyl laurate, isopropyl palmitate, cetyl palmitate, isopropyl stearate, butyl stearate, isobutyl stearate, trimethylolpropane trioctanoate or trimethylolpropane tridecanoate; an alkylphenol derivative, for example ethoxylated octylphenol; an optionally alkoxylated (*e.g.*, ethoxylated) fatty alcohol, such as for example polyethylene glycol laurate or stearate comprising methyl end groups, and in some embodiments comprising less than 10 oxyethylene units; fatty amine salts; and mixtures thereof.

Suitable surfactants for use in the sizing compositions of the disclosure include aliphatic or aromatic polyalkoxylated compounds which are optionally halogenated, such as ethoxylated/propoxylated alkylphenols, and in some embodiments including 1 to 30 ethylene oxide groups and 0 to 15 propylene oxide groups, ethoxylated/propoxylated bisphenols, and in some embodiments including 1 to 40 ethylene oxide groups and 0 to 20 propylene oxide groups, ethoxylated/propoxylated fatty alcohols, the alkyl chain of which may comprise 8 to 20 carbon atoms and including 2 to 50 ethylene oxide groups and up to 20 propylene oxide groups. These polyalkoxylated compounds can be block or random copolymers.

Suitable additives for use in the sizing compositions of the disclosure include:
- complexing agents, such as an EDTA derivative, a gallic acid derivative or a phosphonic acid derivative;
- phosphite derivatives;
- antifoaming agents, such as a silicone and a vegetable oil;
- a polyol;
- antistatic agents;
- an acid used to control the pH during the hydrolysis of the coupling agent, for example, acetic acid, lactic acid or citric acid.

The amount of lubricant, surfactant, plasticizing agent, dispersing agent, additives, or combinations thereof in the sizing composition (dry extract solids content) may be in the range from 0.1% to 4% by weight.

The amount of water used to prepare the sizing composition is determined so as to obtain a solids content (dry extract) which varies from about 2% to about 15% by weight. The sizing composition according to the disclosure has a viscosity in the range from about 20 to about 500 mPa.s, in some embodiments from about 80 to about 250 mPa.s (as measured with a Brookfield Viscometer at 20° C with a #2 spindle).

The sizing composition of the disclosure can be prepared by a process comprising the steps of:
a) hydrolysing the coupling agent;
b) adding the cationic polymer to the solution thus obtained;
c) adding the texturing agent to the resulting mixture;
d) adding at least one film-forming agent, the agent selected from a lubricant, a surfactant, a plasticizing agent, a dispersing agent, additive(s), and combinations thereof to the resulting mixture; and
e) optionally adding another film-forming agent to the resulting mixture.

Hydrolysis of the coupling agent requires a large amount of water, *i.e.,* at least about 30%, and in some embodiments at least about 50%, of the volume of the final sizing composition. When the coupling agent comprises a silane other than an aminosilane, hydrolysis is carried out at a slightly acidic pH, *e.g.,* pH 4-4.5, upon addition of an acid such as acetic acid, lactic acid or citric acid. If several coupling agents are used, it may be preferable to solubilize each agent in turn.

Addition of the cationic polymer, which can be available as a solution, to the coupling agent hydrolysed in a large amount of water, will result in the polymer being diluted.

The texturing agent is generally available as a powder. Its addition to the mixture of hydrolysed coupling agents and cationic polymer must be controlled so that aggregation of powder is avoided and the powder is fully hydrated. To this end it is recommended to slowly add the texturing agent (*e.g*., "grain-to-grain" addition) under sufficient stirring to ensure that a homogeneous gel is obtained. This can be done using a dispersing machine, for example a high shear stirrer. A suitable dispersing machine is available from the German company IKA. The absence of aggregated powder in the mixture can be checked by granulometry.

The sizing composition may comprise several film-forming agents. In such a case, at least one film-forming agent is added in step d). Depending on the nature of the sizing composition, film-forming agent(s) can also be added after step d) is complete.

In some exemplary embodiments, additional water can be added after step d) or step e) to adjust the solids content of the sizing composition to the desired value.

The sizing composition of the disclosure can be used to prepare glass fiber strands. Thus, another aspect of the disclosure relates to a glass fiber strand comprising a plurality of individual glass fibers coated with the sizing composition as defined above.

As used herein, the term "strands" means the base strands resulting from the gathering together under the bushing of a multitude of filaments, and the products derived from these strands, and in particular, the assemblies of these strands in the form of rovings. Rovings can be either direct rovings or multi-end rovings. Direct rovings are obtained by gathering together filaments directly under the bushing and winding them onto a rotating support. Multi-end rovings are obtained by a two-step process: cakes are first obtained by gathering together filaments and by splitting them into several bundles and wrapping them into a cylindrical package; rovings are then obtained by assembling several dried cakes together.

The glass fibers used in the preparation of the strands in accordance with the disclosure can be made of any type of glass, in some embodiments of E glass, E-CR glass, R glass, S glass or AR glass, in still some embodiments of E glass, E-CR glass or R glass.

As mentioned above, the aqueous sizing composition is deposited on the filaments before they are gathered together into base strand(s). Water is usually removed by drying the strands after collection under temperature and duration conditions which make it possible to achieve a water content of less than 0.25%, in some embodiments of less than 0.1%. Generally, drying is carried out at a temperature which varies from 100° to 150° C for 10 to 30 hours, depending on the type of package and the initial water content.

The amount of size deposited on the glass fiber strand is in the range from about 0.2% to about 5% by weight.

The average diameter (as determined by optical microscopy) of the glass filaments is generally in the range from about 10 to about 24 µm. The linear density of the strand can vary from about 300 to about 4800 tex (bare glass value), depending on the application sought.

The glass fiber strands of the disclosure can be used as reinforcement for thermoplastic or thermosetting composite materials, in some embodiments for thermosetting composite materials. A further aspect of the disclosure thus relates to a composite material comprising optionally woven glass fiber strands as defined above. The composite material may have a glass content in the range from about 20% to about 80% by weight.

The examples below illustrate exemplary embodiments of the disclosure. In these examples the following constituents were used.

### Film-Forming Agent

Vinamul® 8828, available from Celanese: aqueous emulsion of polymer based on vinyl acetate and N-methylolacrylamide; solids content: 52%
Vinamul® 8852, available from Celanese: aqueous emulsion of polyvinyl acetate; molecular weight = 50 000; solids content: 55%
Filco® 310 STD, available from Coim: aqueous emulsion of modified epoxy resin; solids content: 52%
AD-502, available from AOC ; epoxy resin emulsion; solids content: 47%

### Coupling Agent

Silquest® A-174, available from GE Silicones: gamma-methacryloyloxypropyltrimethoxysilane; solids content: 82%
Silquest® A-187, available from GE Silicones: gammaglycidoxypropyltrimethoxysilane; solids content: 71%
Silquest® A-1100, available from GE Silicones: gamma-aminopropyltriethoxysilane; solids content: 61%

### Texturing Agent

Rheozan® SH, available from Rhodia: succinoglycan; solids content: 100% Cationic polymer
Katax® 6760, available from Pulcra: polyamides of acetic acid, of C5-C9 carboxylic acids and of diethylenetriamine-ethyleneimine; total amine value = 180-260; total tertiary amine value = about 50% of total amine value; acid value (% acetic acid) = 14-16; solids content: 50%
Polyethyleneimine-based polymer (PEI), obtained as described in U.S. Patent No. 6,399,741; total amine value = 180-220; total tertiary amine value = at least 80% of total amine value; acid value (% acetic acid) = 30-40; solids content: 70%

### Lubricant, surfactant, other additives

K-Flex® 500, available from Noveon: diethylene/dipropylene glycol dibenzoate; solids content: 100%
Radiasurf® 7403, available from Oleon; 11.6 PEG-400 monooleate
Mono-PE, available from Hercules; mono pentaerythritol; solids content: 100%
Katax® 6660A, available from Pulcra; quaternary ammonium antistatic agent.

### Examples 1-2 and Comparative Example 1

The sizing compositions were prepared as follows.
a) The coupling agents were hydrolysed in the presence of acetic acid (pH 4.5-5); this was done, for each coupling agent, with stirring at room temperature for about 20-30 min. The volume of water was 30% of the volume of the size (ex. 1 and comp. ex. 1) or 60% of the volume of the size (ex. 2).
b) An aqueous solution of the cationic polymer was then added to the hydrolysed coupling agents.
c) When present, the texturing agent was then slowly added to the mixture obtained in step b) under high shear stirring (apparatus available from IKA).
d) The Vinamul® 8828 and Vinamul® 8852 film-forming agents were then added to the resulting mixture, followed by the plasticizing agent.
e) The Filco® 310 film-forming agent was added to the resulting mixture.
f) Water was finally added to the mixture to adjust the solids content to the desired value.

### Preparation of roving - examples 1 & 2

Molten E-glass was drawn from a bushing having 2400 holes to obtain glass filaments, with each glass filament having a diameter equal to 14 µm. The sizing composition was applied to the glass filaments using a "full bath" sizing roll, the filaments being then used to prepare cakes each made of six bundles of 80 tex (hence the linear density of each cake was 480 tex). Five cakes were assembled to prepare a roving of 2400 tex. The roving was dried and cured for 13 hours at a temperature between 100° and 140° C.

The composition of the size (wt% of each constituent), the properties of the size and of the glass strand are given in Table 1.

### Preparation of roving - comparative example 1

Molten E-glass was drawn from a bushing having 3200 holes to obtain filaments having a diameter equal to 15.6 µm. The sizing composition was applied to the glass filaments using a rotating sizing roll, the filaments being then used to prepare cakes each made of ten bundles of 80 tex (hence the linear density of each cake was 800 tex). Three cakes were assembled to prepare a roving of 2400 tex. The roving was dried and cured for 13 hours at a temperature between 100° and 140° C.

The composition of the size (wt% of each constituent), the properties of the size and of the glass strand are given in Table 1.

**Table 1**

| | Ex.1 | Ex.2 | Comp. Ex. 1 |
|---|---|---|---|
| Acetic acid | 0.104 | 0.104 | 0.104 |
| Silquest A-174 | 0.29 | 0.29 | 0.29 |
| Silquest A-1100 | 0.19 | 0.19 | 0.19 |
| PEI | 0.1 | 0.1 | - |
| Katax 6760 | - | - | 0.194 |
| Rheozan | 0.18 | 0.22 | - |
| Vinamul 8828 | 7.0 | 7.0 | 7.0 |
| Vinamul 8852 | 3.58 | 3.58 | 3.58 |
| Filco 310 STD | 2.4 | 2.4 | 2.4 |
| K-Flex 500 | 0.26 | 0.26 | 0.26 |
| Size | | | |
| Viscosity (cP) | 120 | 220 | <5 |
| Solids content (%) | 10.0 | 9.45 | 8.74 |
| Strand | | | |
| LOI (%) | 1.23 | 1.16 | 1.26 |
| Linear density (Tex) | 2333 | 2408 | 2400 |
| Fuzz (mg/kg) | 9 | 7.2 | 12 |
| Stiffness (mm) | 155 | 135 | 168 |
| Acetone solubility | nd | 62 | 60 |

| | | | |
|---|---|---|---|
| nd: not determined | | | |

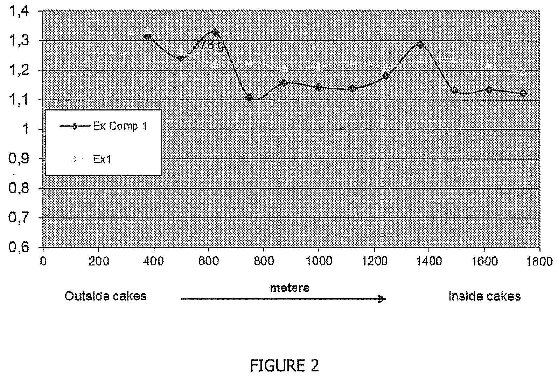

Figure 2 shows the LOI as a function of the length of strand unwound from the external part of a cake made according to example 1 and comparative example 1. It can be seen that LOI variation is minimal for the cake made according to example 1, whereas LOI varies to a significant extent for the cake made according to comparative example 1.

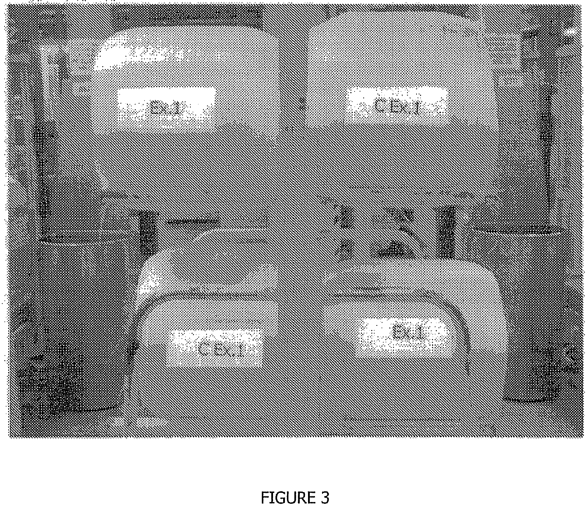

Figure 3 shows the coloration of cakes made according to example 1 (top left and bottom right) and comparative example 1 (top right and bottom left). It was observed that cakes made according to comparative example 1 displayed an undesirable yellow color.

### Example 3 and Comparative Example 2

The sizing compositions were prepared as follows.
a) The coupling agents were hydrolysed in the presence of acetic acid (pH 4-4.5); this was done, for each coupling agent, with stirring at room temperature for about 20-30 min. The volume of water was 70% of the volume of the size.
b) An aqueous solution of the cationic polymer was then added to the hydrolysed coupling agents.
c) The texturing agent was then slowly added to the mixture obtained in step b) under high shear stirring (apparatus available from IKA).
d) The Radiasurf 7403 was then added to the resulting mixture, followed by the Mono PE in aqueous solution and, when present, the antistatic agent.
e) The film-forming agent was added to the resulting mixture.
f) Water was finally added to the mixture to adjust the solids content to the desired value.

Molten E-CR glass was drawn from a bushing having 4000 holes to obtain glass filaments, with each glass filament having a diameter equal to 17 µm. The sizing composition was applied to the glass filaments using a "full bath" sizing roll, the filaments being then gathered together into a wound strand in the form of a roving with a weight equal to 25 kg. The roving was dried at 130° C for 20 hours.

The composition of the size (wt% of each constituent), the properties of the size and of the glass strand are given in Table 2.

**Table 2**

| | Ex.3 | Comp. Ex.2 |
|---|---|---|
| Acetic acid | 0.04 | 0.04 |
| Silquest A-174 | 0.505 | 0.581 |
| Silquest A-187 | 0.351 | 0.403 |
| PEI | 0.08 | - |
| Katax 6760 | - | 0.088 |
| Rheozan | 0.22 | - |
| Radiasurf 7403 | 1.147 | 1.318 |
| Mono PE | 0.024 | 0.028 |
| AD 502 | 7.64 | 9.346 |
| Katax 6660A | - | 0.069 |
| Size | | |
| Viscosity (cP) | 130 | <5 |
| Solids content (%) | 5.5 | 5.66 |
| Strand | | |
| LOI (%) | 0.55 | 0.53 |
| Linear density (Tex) | 2346 | nd |
| Tenacity (N/Tex) | 0.40 | 0.45 |
| Fuzz (mg/kg) | 15 | 18 |
| Sizing efficacy (%) | 97 | 90 |

| | | |
|---|---|---|
| nd = not determined | | |

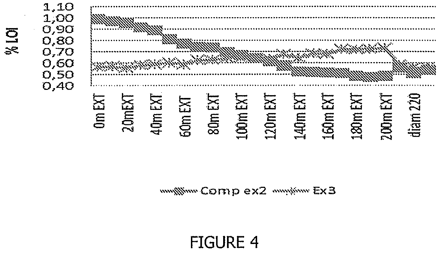

Figure 4 shows the LOI as a function of the external roving length. It can be seen that the LOI does not significantly vary for the roving made according to example 3 while it increases outside the roving made according to comparative example 2. This increase is due to the migration of the polar size ingredients during the drying step of the roving.

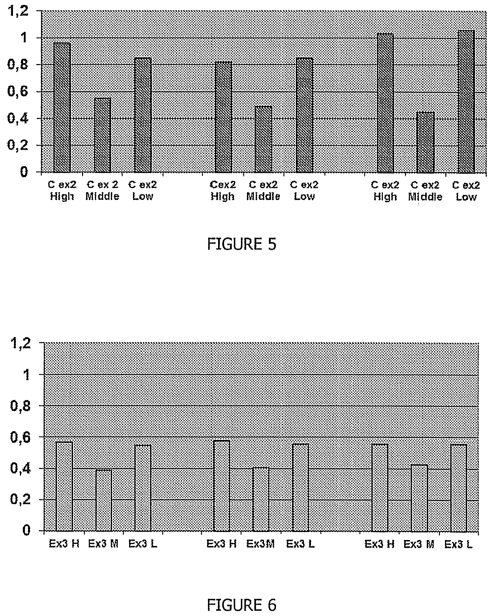

Figures 5 and 6 show the LOI as a function of the strand position in the bobbins turnaround: High - H; Low - L; or in the Middle of the roving height - M in rovings made according to example 3 and comparative example 2, respectively. Each figure shows results for three different rovings. It can be seen that LOI is less prone to intervariability (between high and low turnarounds and middle roving height) for the roving made in accordance with example 3. The better LOI consistency will give better mechanical properties in composites prepared therefrom.

### Example 4

Glass strands according to Example 3 and comparative example 2 were used to form 2 mm-thick composite plates comprising parallel strands under the conditions set out in Standard ISO 1268-5 using a polyester resin available from the company Reichhold under the trade name Polytite^{®} 413. The plates were heat-treated at 60° C for 16 hours.

Test specimens were cut out from the plates and were treated for 24 hours in boiling water. The tensile strength of the test specimens was measured in the fiber direction. The three-point bending strength of test specimens was measured in the transverse direction. The mechanical properties of the composite plates (mean of test specimens when available) are reported in Table 3.

**Table 3**

| | Ex.3 | Comp. ex.2 |
|---|---|---|
| Tensile strength (MPa) | 1089 | 1318 |
| Volume fiber fraction (%) | 57 | 58 |
| Tensile strength at 60% volume fiber fraction (MPa) | 1154 | 1362 |
| Flexural strength (initial, MPa) | 66 | 59 |
| Flexural strength (after wet aging, MPa) | 32 | 30 |
| Loss in flexural strength (%) | 51 | 49 |

The above results show that composites made in accordance with the disclosure retain good mechanical properties which are compatible with their use as reinforcement for thermoplastic or thermosetting materials.

### Measures of Properties

The viscosity of the sizing composition, expressed in cP (mPa.s), was measured using a Brookfield LVF viscometer equipped with a spindle of LV type under the following conditions: the spindle was immersed in 500 g of sizing composition present in a cylindrical container with a diameter of 9 cm, the spindle (a No. 2 (#2) spindle) was rotated at 60 rpm for 1 minute, and the viscosity was measured at 20° C.

The loss on ignition (LOI) of glass strands, expressed as %, was measured according to Standard ISO 1887.

The tenacity of glass strands, expressed in N/tex, was assessed by measuring the tensile breaking force under the conditions defined by Standard ISO 3341.

The "fuzz" of glass strands, given in mg per 1 kg of strand tested, makes it possible to assess the resistance to abrasion of a strand. It was measured by weighing the amount of material which separates from the strand after the latter has passed over a series of 2, 4 or 6 cylindrical ceramic bars positioned so that the deflection angle of the strand at each bar is equal to 90°.

The tensile strength of the composite, expressed in MPa, was measured according to Standard ISO 527-5.

The volume fiber fraction of the composite, expressed as %, was measured according to Standard ISO 1172.

The flexural strength of the composite, expressed in MPa, was measured according to Standard ISO 14125 (initial and after wet aging).

## Claims

1. A sizing composition for glass fiber strands, the sizing composition comprising by weight of dry extract solids content:
0.1 % to 2% of at least one texturing agent;
2% to 15% of at least one film-forming agent;
0.1 % to 4% of at least one coupling agent;
0.01% to 0.5% of at least one cationic polymer comprising a polyalkyleneimine backbone, said cationic polymer having 20% or less of reactive amino groups; and
0.1 % to 6% of at least one compound selected from a lubricant, a surfactant, a plasticizing agent, a dispersing agent, additives, and mixtures thereof.

2. The sizing composition according to claim 1, wherein the texturing agent is selected from xanthan and succinoglycan.

3. The sizing composition according to claim 1 or claim 2, which comprises from 0.15% to 0.5% by weight of texturing agent.

4. The sizing composition according to any one of claims 1 to 3, wherein the coupling agent is selected from silanes, siloxanes, titanates, zirconates, and mixtures thereof.

5. The sizing composition according to any one of claims 1 to 4,wherein the coupling agent is a silane or a mixture of silanes.

6. The sizing composition according to any one of claims 1 to 5, wherein said cationic polymer has from 0.1% to 10% of reactive amino groups.

7. The sizing composition according to any one of claims 1 to 6, wherein the polyalkyleneimine is a polyethyleneimine.

8. The sizing composition according to any one of claims 1 to 7, wherein the film-forming agent is selected from a polyvinyl acetate, a polyester, a polyether, an epoxy compound, a polyacrylic, a polyurethane, and mixtures thereof.

9. The sizing composition according to any one of claims 1 to 8, which comprises from 2% to 10% by weight of the film-forming agent.

10. The sizing composition according to any one of claims 1 to 9, which comprises from 0.1% to 4% by weight of at least one compound selected from a lubricant, a surfactant, a plasticizing agent, a dispersing agent, an additive, and mixtures thereof.

11. The sizing composition according to any one of claims 1 to 10, having a viscosity in the range from about 20 mPa.s to about 500 mPa.s.

12. A glass fiber strand comprising a plurality of individual glass fibers coated with the sizing composition according to any one of claims 1 to 11.

13. The glass strand according to claim 12, wherein the amount of sizing composition deposited on the glass fiber strand is in the range from about 0.2% to about 5% by weight.

14. The glass fiber strand according to claim 12 or claim 13, wherein the glass fibers are made from E glass, E-CR glass, R glass, S glass, or AR glass.

15. A composite material comprising at least one organic or inorganic material, or mixtures thereof, and the glass fiber strand as defined in any one of claims 12 to 14.

16. The composite material according to claim 15, having a glass content in the range from about 20% to about 80% by weight.

## Patentansprüche

1. Schlichtzusammensetzung für Glasfaserstränge, wobei die Schlichtzusammensetzung in Gewichtsprozenten des Trockenextraktfeststoffgehalts umfasst:
0,1 bis 2 % wenigstens eines Strukturmittels,
2 bis 15 % wenigstens eines filmbildenden Mittels,
0,1 bis 4 % wenigstens eines Kopplungsmittels,
0,01 bis 0,5 % wenigstens eines kationischen Polymers, das ein Polyalkylenimin-Rückgrat umfasst, wobei das kationische Polymer 20 % oder weniger reaktive Aminogruppen aufweist, und
0,1 bis 6 % wenigstens einer Verbindung, die aus einem Schmiermittel, einem Tensid, einem Weichmacher, einem Dispersionsmittel, Zusatzstoffen und Mischungen davon ausgewählt ist.

2. Schlichtzusammensetzung nach Anspruch 1, wobei das Strukturmittel aus Xanthan und Succinoglycan ausgewählt ist.

3. Schlichtzusammensetzung nach Anspruch 1 oder 2, die 0,15 bis 0,5 Gewichts-% eines Strukturmittels umfasst.

4. Schlichtzusammensetzung nach einem der Ansprüche 1 bis 3, wobei das Kopplungsmittel aus Silanen, Siloxanen, Titanaten, Zirconaten und Mischungen davon ausgewählt ist.

5. Schlichtzusammensetzung nach einem der Ansprüche 1 bis 4, wobei das Kopplungsmittel ein Silan oder eine Mischung vom Silanen ist.

6. Schlichtzusammensetzung nach einem der Ansprüche 1 bis 5, wobei das kationische Polymer 0,1 bis 10 % reaktive Aminogruppen aufweist.

7. Schlichtzusammensetzung nach einem der Ansprüche 1 bis 6, wobei das Polyalkylenimin ein Polyethylenimin ist.

8. Schlichtzusammensetzung nach einem der Ansprüche 1 bis 7, wobei das filmbildende Mittel aus einem Polyvinylacetat, einem Polyester, einem Polyether, einer Epoxyverbindung, einem Polyacryl, einem Polyurethan und Mischungen davon ausgewählt ist.

9. Schlichtzusammensetzung nach einem der Ansprüche 1 bis 8, das 2 bis 10 Gewichts-% des filmbildenden Mittels umfasst.

10. Schlichtzusammensetzung nach einem der Ansprüche 1 bis 9, das 0,1 bis 4 Gewichts-% wenigstens einer Verbindung umfasst, die aus einem Schmiermittel, einem Tensid, einem Weichmacher, einem Dispersionsmittel, einem Zusatzstoff und Mischungen davon ausgewählt ist.

11. Schlichtzusammensetzung nach einem der Ansprüche 1 bis 10, das eine Viskosität im Bereich von ungefähr 20 mPa.s bis ungefähr 500 mPa.s aufweist.

12. Glasfaserstrang, umfassend mehrere einzelne Glasfasern, die mit der Schlichtzusammensetzung nach einem der Ansprüche 1 bis 11 beschichtet sind.

13. Glasfaserstrang nach Anspruch 12, wobei die Menge der Schlichtzusammensetzung, die auf dem Glasfaserstrang abgelagert ist, im Bereich von ungefähr 0,2 bis ungefähr 5 Gewichts-% liegt.

14. Glasfaserstrang nach Anspruch 12 oder 13, wobei die Glasfasern aus E-Glas, E-CR-Glas, R-Glas, S-Glas oder AR-Glas hergestellt sind.

15. Verbundmaterial, umfassend wenigstens ein organisches oder anorganisches Material oder Mischungen davon und den Glasfaserstrang nach einem der Ansprüche 12 bis 14.

16. Verbundmaterial nach Anspruch 15, das einen Glasgehalt im Bereich von ungefähr 20 bis 80 Gewichts-% aufweist.

## Revendications

1. Composition d'ensimage pour fils de fibres de verre, la composition d'ensimage comprenant, en masse d'extraits solides secs :
0,1% à 2% d'au moins un agent texturant ;
2% à 15% d'au moins un agent filmogène ;
0,1 % à 4% d'au moins un agent de couplage ;
0,01% à 0,5% d'au moins un polymère cationique comprenant un squelette polyalkylèneimine, ledit polymère cationique possédant 20% ou moins de groupes amino réactifs ; et
0,1% à 6% d'au moins un composé choisi parmi un lubrifiant, un tensioactif, un agent plastifiant, un agent dispersant, des additifs et leurs mélanges.

2. Composition d'ensimage selon la revendication 1, dans laquelle l'agent texturant est choisi parmi le xanthane et le succinoglycane.

3. Composition d'ensimage selon la revendication 1 ou 2, qui comprend de 0,15% à 0,5% en masse d'agent texturant.

4. Composition d'ensimage selon l'une quelconque des revendications 1 à 3, dans laquelle l'agent de couplage est choisi parmi les silanes, les siloxanes, les titanates, les zirconates et leurs mélanges.

5. Composition d'ensimage selon l'une quelconque des revendications 1 à 4, dans laquelle l'agent de couplage est un silane ou un mélange de silanes.

6. Composition d'ensimage selon l'une quelconque des revendications 1 à 5, dans laquelle ledit polymère cationique possède de 0,1% à 10% de groupes amino réactifs.

7. Composition d'ensimage selon l'une quelconque des revendications 1 à 6, dans laquelle la polyalkylèneimine est une polyethylèneimine.

8. Composition d'ensimage selon l'une quelconque des revendications 1 à 7, dans laquelle l'agent filmogène est choisi parmi l'acétate de polyvinyle, un polyester, un polyéther, un composé époxy, un polyacrylique, un polyuréthane et leurs mélanges.

9. Composition d'ensimage selon l'une quelconque des revendications 1 à 8, qui comprend de 2% à 10% en masse d'agent filmogène.

10. Composition d'ensimage selon l'une quelconque des revendications 1 à 9, qui comprend de 0,1% à 4% en masse d'au moins un composé choisi parmi un lubrifiant, un tensioactif, un agent plastifiant, un agent dispersant, un additif et leurs mélanges.

11. Composition d'ensimage selon l'une quelconque des revendications 1 à 10, ayant une viscosité dans la gamme d'environ 20 mPa.s à environ 500 mPa.s.

12. Fil de fibres de verre comprenant une pluralité de fibres de verre individuelles revêtues d'une composition d'ensimage selon l'une quelconque des revendications 1 à 11.

13. Fil de verre selon la revendication 12, dans lequel la quantité de composition d'ensimage déposée sur le fil de fibres de verre est dans la gamme d'environ 0,2% à environ 5% en masse.

14. Fil de fibres de verre selon la revendication 12 ou la revendication 13, dans lequel les fibres de verre sont faite de verre E, de verre E-CR, de verre R, de verre S, ou de verre AR.

15. Matériau composite comprenant au moins un matériau organique ou inorganique, ou des mélanges de ceux-ci, et le fil de fibres de verre tel que défini dans l'une quelconque des revendications 12 à 14.

16. Matériau composite selon la revendication 15, ayant une teneur en verre dans la gamme d'environ 20% à environ 80% en masse.
